## Europäisches Patentamt

## European Patent Office

## Office européen des brevets

(19)

(11) Numéro de publication: **0 064 418**
**B1**

(12)

# FASCICULE DE BREVET EUROPEEN

(45) Date de publication du fascicule du brevet:
**16.01.85**

(51) Int. Cl.⁴: **C 21 C 5/40**

(21) Numéro de dépôt: **82400268.7**

(22) Date de dépôt: **16.02.82**

(54) **Installation de production d'acier comportant un convertisseur, une hotte et une lance de soufflage.**

(30) Priorité: **13.04.81 FR 8107337**
**03.08.81 FR 8115011**

(43) Date de publication de la demande:
**10.11.82 Bulletin 82/45**

(45) Mention de la délivrance du brevet:
**16.01.85 Bulletin 85/3**

(84) Etats contractants désignés:
**DE GB IT**

(56) Documents cités:
**FR - A - 1 204 443**
**FR - A - 1 531 623**
**US - A - 2 862 701**
**US - A - 3 002 739**
**US - A - 3 223 397**

(73) Titulaire: **FIVES-CAIL BABCOCK, Société anonyme, 7 rue Montalivet, F-75383 Paris Cedex 08 (FR)**

(72) Inventeur: **Menu, Edouard, 56 Blvd de la République, F-78000 Versailles (FR)**
Inventeur: **Cambournac, Roland, 22bis, rue des Cottages, F-77500 Chelles (FR)**

(74) Mandataire: **Fontanié, Etienne, FIVES-CAIL BABCOCK 7, rue Montalivet, F-75383 Paris Cedex 08 (FR)**

ACTORUM AG

## Description

La présente invention concerne les installations pour la production d'acier comportant un convertisseur, notamment de type A.O.D. (Argon-Oxygène-Décarburation), une lance verticale placée au-dessus du convertisseur et permettant d'insuffler de l'oxygène dans le bain de métal et une hotte reliée à une cheminée et servant à capter et à évacuer les fumées produites pendant le soufflage.

Dans les aciéries, les convertisseurs sont généralement placés à l'extérieur de la halle où circulent les ponts roulants servant au chargement du convertisseur et à la manutention des poches. Pour pouvoir accéder au convertisseur par le haut, notamment pour refaire le garnissage de la cornue, la lance et la hotte sont montées sur des supports mobiles et peuvent être écartées du convertisseur. Habituellement, la hotte et la lance sont montées sur des supports distincts constitués par des chariots déplaçables au-dessus du convertisseur.

Dans les installations comportant un convertisseur du type A.O.D., le garnissage de la cornue doit être refait très fréquemment et, pour éviter les pertes de temps, on a prévu une ou plusieurs cornues de rechange.

Pour faciliter le remplacement de la cornue, le convertisseur est placé dans la halle où circulent les ponts roulants. Il est alors impossible d'utiliser les moyens classiques pour supporter la hotte et la lance, car des rails placés au-dessus du convertisseur ou de part et d'autre de celui-ci gêneraient la manutention des poches ou des cornues.

Le but de la présente invention est d'apporter une solution au problème du montage de la hotte et de la lance sur un support mobile, dans une installation comportant un convertisseur situé dans une halle où circulent des ponts roulants, la hotte étant raccordée, pendant le soufflage, à une cheminée située à l'extérieur de la halle et pouvant être amenée dans une position où elle ne gêne pas les mouvements des ponts roulants.

L'installation objet de l'invention est caractérisé en ce que la hotte et la lance sont entièrement supportées par un support rotatif qui est monté en porte à faux de façon à pouvoir pivoter autour d'un axe vertical situé latéralement par rapport au convertisseur, entre ce dernier et la cheminée, la hotte et la lance étant montées à l'extrémité libre dudit support.

Ledit support est avantageusement constitué par un cadre ou une fourche, la hotte étant fixée à l'extrémité inférieure d'un conduit coudé porté par ledit support et venant se placer au bout d'un conduit fixe quand la hotte est amenée en position de soufflage. La lance est montée, de manière connue, sur un chariot déplaçable le long d'un chemin de roulement vertical fixé sur l'extrémité libre du support rotatif; le mécanisme qui commande les déplacements du chariot porte-lance est aussi monté sur ledit support.

Dans un mode de réalisation préféré, le support rotatif, en forme de cadre ou de fourche, est incliné et son extrémité libre, qui porte la hotte et la lance, se trouve à un niveau supérieur à son autre extrémité.

Le montage rotatif du support peut être réalisé au moyen d'un pivot monté sur une console fixée sur un pilier de la halle où se trouve le convertisseur.

Lorsque la cornue du convertisseur a un bec tronqué, il est souhaitable, pour maintenir un écartement convenable entre la hotte et le bec, de placer l'axe de rotation du support de la hotte et de la lance approximativement dans le plan médian vertical, perpendiculaire à l'axe de basculement de la cornue qui est lui-même parallèle à l'axe longitudinal de la halle. Il est alors avantageux de monter ledit support rotatif sur une poutre surélevée disposée transversalement audit plan médian vertial et de le prolonger vers l'arrière, au-delà de son axe de rotation, pour permettre un équilibrage au moins partiel du poids de la hotte et de la lance et réduire les efforts de torsion dans ladite poutre. Cette construction équilibrée permet d'utiliser une simple couronne de roulement pour le montage rotatif du support sur la poutre. La poutre peut être fixée sur les piliers de la halle ou supportée à ses extrémités par des poteaux de façon à former un portique. Le conduit auquel la hotte est raccordée se prolonge aussi vers l'arrière, au-delà de l'axe de rotation du support et est supporté par celui-ci pratiquement sur toute sa longueur; la partie arrière du conduit participe ainsi à l'équilibrage de l'ensemble rotatif. Un contrepoids peut être monté sur la partie arrière du support pour parfaire l'équilibrage.

Lorsque les déplacements du chariot porte-lance sont commandés par un système à câble et treuil, le treuil et son moteur d'entraînement sont avantageusement disposés sur ledit support près de son axe de rotation pour réduire les efforts de flexion. Dans le cas où le support rotatif se prolonge au-delà de l'axe de rotation, le treuil et le moteur peuvent être montés sur la partie arrière du support pour participer à l'équilibrage de l'ensemble.

D'autres caractéristiques de l'invention apparaîtront à la lecture de la description qui suit et se réfère aux dessins l'accompagnant qui montrent, à titre d'exemple non limitatif, deux modes de réalisation de l'invention et sur lesquels:

la fig. 1 est une vue en plan d'une installation réalisée conformément à l'invention;

la fig. 2 est une vue en élévation d'une partie de l'installation de la fig. 1;

la fig. 3 est une vue en plan d'une autre installation réalisée conformément à l'invention, et

la fig. 4 est une vue en élévation de l'installation de la fig. 3.

Les installations représentées sur les dessins comportent un convertisseur 10, une hotte 12 reliée par un conduit 14 à une cheminée non représentée et destinée à évacuer les gaz qui se dégagent du bain de métal contenu dans la cornue du convertisseur pendant l'opération de soufflage, et une lance 16 servant à insuffler de l'oxygène dans le bain de métal.

Le convertisseur est situé dans une halle où se déplacent les ponts roulants servant au transport des poches et à la manutention des cornues; il est disposé de telle sorte que son axe de basculement Y-Y soit parallèle à l'axe longitudinal de la halle. Les piliers de la halle sont désignés par le numéro de référence 11 sur les dessins.

La cheminée se trouve à l'extérieur de la halle, dans un bâtiment attenant à celle-ci.

La hotte et la lance sont portées par un même support 18 monté pivotant autour d'un axe vertical X-X situé à l'écart du convertisseur, entre celui-ci et la cheminée. Dans les deux modes de réalisation représentés, l'axe X-X est situé approximativement dans l'alignement des piliers 11.

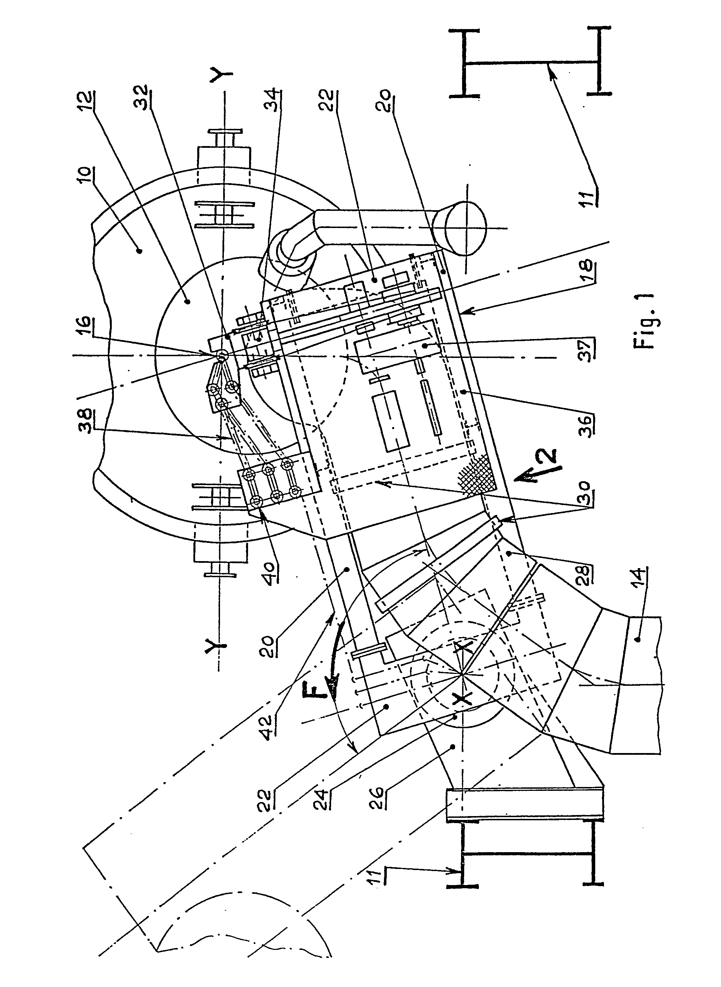

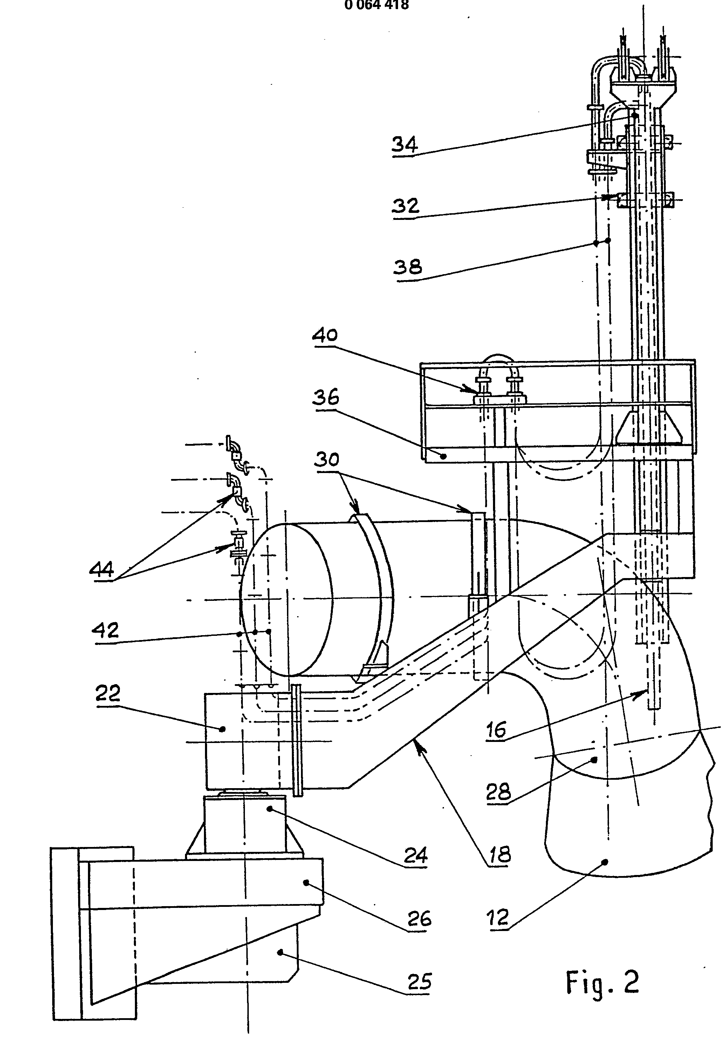

Dans le mode de réalisation des fig. 1 et 2, le support 18, en forme de cadre, est consitué par deux poutres longitudinales 20 entretoisées à leurs extrémités par deux traverses 22; il est incliné et la traverse inférieure porte un pivot vertical 24 monté dans des paliers portés par une console 26 fixée sur un pilier de la halle. La console 26 est placés à une hauteur suffisante pour que la rotation du support 18 ne présente aucun danger pour le personnel. La rotation du support 18 est commandée par un motoréducteur 25.

La hotte 12 est raccordée à l'extrémité inférieure d'un conduit coudé 28 qui traverse le support 18 de sorte qu'elle est située au-dessous de la traverse supérieure du support. Le conduit 28 est fixé sur celui-ci au moyen de colliers 30. La partie supérieure du conduit 28 est approximativement horizontale et se place au bout du conduit 14 quand la hotte est centrée sur la cornue du convertisseur, comme représenté sur la fig. 1.

La lance 16 est placée au-dessus de la hotte et montée sur un chariot 32 déplaçable le long d'un chemin de roulement constitué par une poutre verticale 34 disposée sur un côté du support 18. Cette poutre est supportée, d'une part, par la traverse supérieure du support et, d'autre part, par une charpente 36 fixée sur celui-ci. Les mouvements du chariot sont commandés par un mécanisme 37, par exemple à câble et treuil, qui est monté sur la charpente 36.

La lance 16 est reliée par des tuyaux flexibles 38 à une bride de raccordement 40 qui est elle-même reliée à des tuyauteries fixes par des tuyaux 42 et des raccords tournants 44 coaxiaux au pivot 24.

Une ouverture est prévue dans la hotte, à la verticale de la lance, pour permettre d'introduire cette dernière dans la cornue.

Pendant le soufflage, la hotte et la lance se trouvent au-dessus de la cornue du convertisseur, comme représenté sur la fig. 1. En fin de soufflage, la hotte et la lance sont écartées du convertisseur par rotation du support 18 dans le sens de la flèche F.

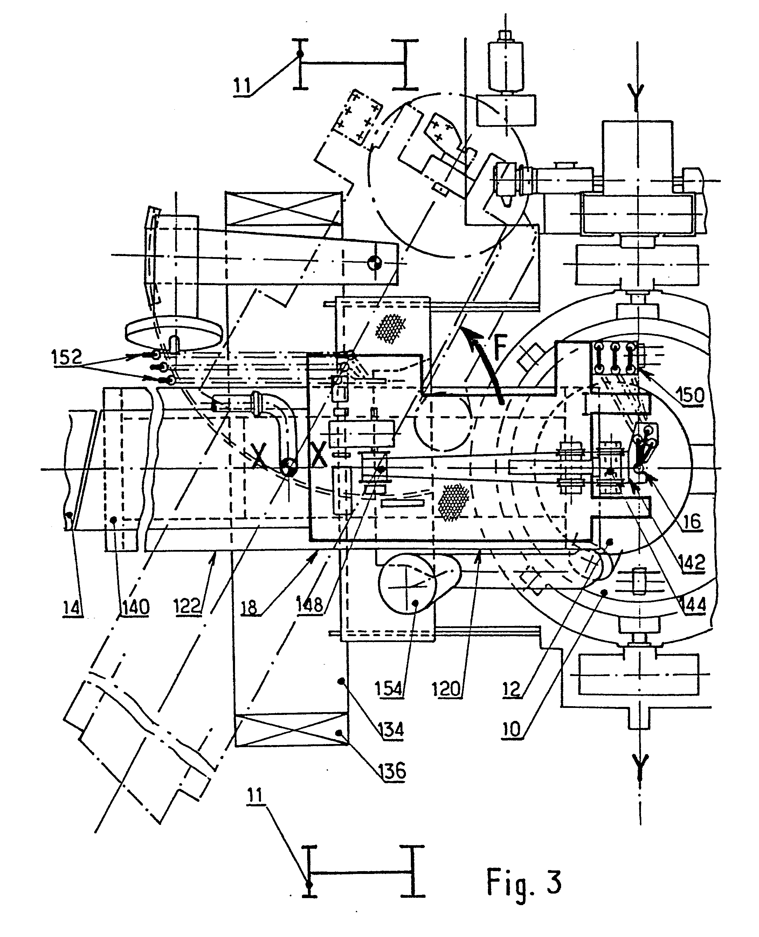

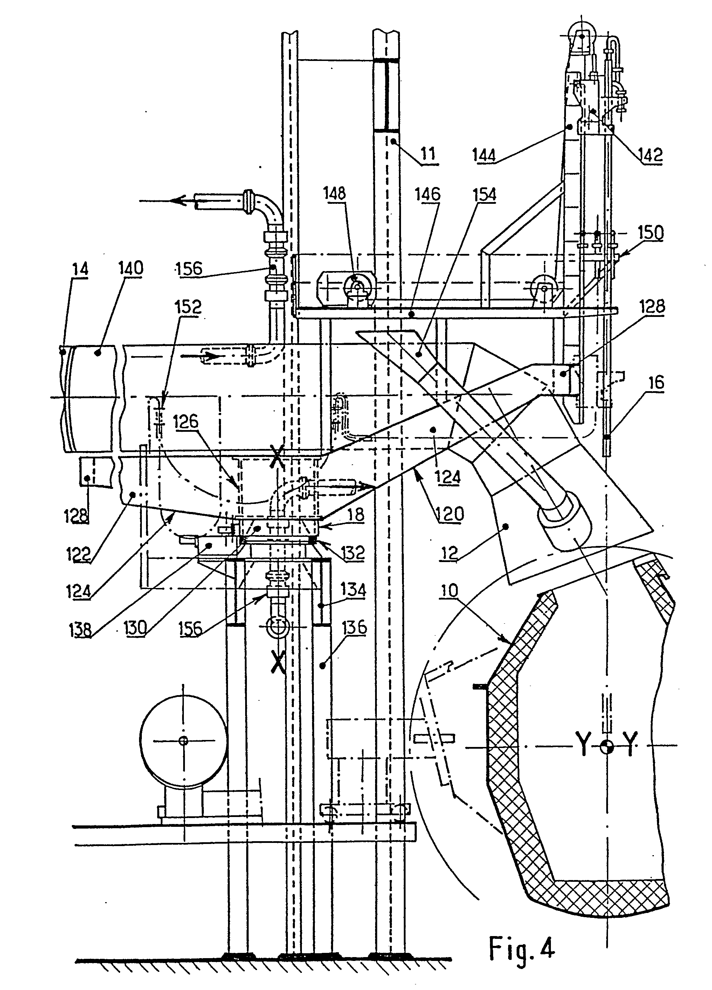

Dans l'installation des fig. 3 et 4, le support 18 comporte deux bras 120 et 122 diamétralement opposés. Chaque bras a la forme d'un cadre et est constitué par deux poutres longitudinales 124 fixées à l'une de leurs extrémités sur un caisson central 126 et entretoisées à leur autre extrémité par une traverse 128.

Le bras avant 120, qui est situé du même côté que le convertisseur par rapport à l'axe X-X, est incliné de telle sorte que la traverse 128 se trouve à un niveau supérieur à celui du caisson 126. Le bras arrière 122 est horizontal.

Le support 18 repose, par l'intermédiaire d'un moyeu 130 fixé sous le caisson central et d'une couronne de roulement à billes ou à rouleaux 132, sur une poutre 134 qui est elle-même supportée, à ses extrémités, par deux poteaux 136 dont les pieds sont ancrés au sol. La poutre 134 est située à une hauteur suffisante au-dessus du plancher 100 pour que la rotation du support 18 ne présente aucun danger pour les ouvriers se trouvant sur ce plancher. Cela est très important, car cette rotation peut être commandée automatiquement par un système de sécurité, par exemple en cas de manque d'eau dans le circuit de refroidissement de la hotte, et il n'est pas possible, dans ce cas, de prévenir le personnel et de lui donner le temps de s'écarter du trajet du support mobile. C'est une des raisons pour lesquelles un chariot déplaçable sur des rails montés sur le plancher 100 disposés sur le sol ne pourrait pas être utilisé pour supporter la hotte et la lance. La rotation du support 18 est commandée par un motoréducteur 138 dont l'arbre de sortie porte un pignon engrenant avec un segment de couronne dentée fixé sur le moyeu 130.

La hotte 12 est raccordée à l'extrémité inférieure d'un conduit 140 qui est coudé vers le bas et traverse le cadre formé par le bras 120. Ce conduit est supporté par les bras 120 et 122 et son axe est situé dans le plan de symétrie vertical, contenant l'axe de rotation X-X du support 18; il se place au bout du conduit 14 quand la hotte est centrée sur la cornue, comme représenté en traits pleins sur la fig. 3

La lance 16 est montée sur un chariot 142 déplaçable le long d'un chemin de roulement constitué par une poutre verticale 144 montée à l'extrémité du bras 120. Cette poutre est supportée, d'une part, par la traverse 128 du bras 120 et, d'autre part, par une charpente 146 fixée sur ce bras. Les déplacements du chariot sont commandés par un treuil 148 qui est monté avec son moteur d'entraînement sur la charpente 146 près de l'axe X-X. Le chariot 142 est supporté par deux câbles qui passent sur des poulies de renvoi montées à l'extrémité supérieure de la poutre 144 et s'enroulent sur le tambour du treuil 148.

La lance 16 est reliée par des tuyaux flexibles à une bride de raccordement 150 qui est elle-même reliée à des tuyauteries fixes 152 par des tuyaux flexibles ou des joints tournants.

Une ouverture est prévue dans la hotte 12, à la verticale de la lance, pour permettre d'introduire cette dernière dans la cornue. Une goulotte 154 fixée sur la hotte permet d'introduire des additifs solides dans le bain de métal quand la hotte est en place au-dessus de la cornue.

La hotte et éventuellement l'extrémité attenante du conduit 140 sont refroidies par circulation d'eau dans des tubes tapissant leur surface intérieure ou dans une double enveloppe. L'amenée et l'évacuation de cette eau s'effectuent au moyen de joints tournants 156 dont l'axe coïncide avec l'axe de rotation X-X du suport 18.

Le centre de gravité de l'ensemble rotatif constitué essentiellement par le support 18, la hotte 12, le conduit 140, la lance 16, le chariot 142, la poutre 144 et la charpente 146 se trouve sur une verticale rencontrant le plan de couronne de roulement 132 à l'intérieur de celle-ci, ce qui évite de prévoir un roulement supplémentaire pour reprendre le moment de basculement de cet ensemble. Un contrepoids peut éventuellement être monté sur le bras 122 pour atteindre ce but.

Pendant le soufflage, la hotte et la lance se trouvent au-dessus de la cornue du convertisseur, comme représenté en traits pleins sur la fig. 3. En fin de soufflage, la hotte et la lance sont écartées du convertisseur par rotation du support 18 dans le sens de la flèche F.

### Revendications

1. Installations pour la production d'acier, comportant un convertisseur, une lance de soufflage verticale, une hotte fixée à l'extrémité d'un conduit coudé qui vient se placer à l'extrémité d'un conduit fixe, raccordé à une cheminée, quand la hotte est amenée au-dessus du convertisseur, la hotte et la lance étant montées sur un même support mobile, caractérisée en ce que ledit support (18) est constitué par un cadre ou fourche monté en porte à faux de façon à pouvoir pivoter autour d'un axe vertical (X-X) situé latéralement par rapport au convertisseur (10), entre ce dernier et la cheminée, la hotte (12) et la lance (16) étant montées à l'extrémité libre dudit support.

2. Installation selon la revendication 1, caractérisée en ce que ledit support (18) est incliné de telle sorte que son extrémité libre, qui porte la hotte (12) et la lance (16), se trouve à un niveau supérieur à son autre extrémité, et le conduit coudé (28, 140) traverse le support de sorte que la hotte se trouve sous l'extrémité supérieure dudit support, tandis que l'extrémité du conduit coudé venant se placer au bout du conduit fixe (14) se trouve au-dessus de l'extrémité inférieure du support.

3. Installation selon l'une des revendications 1 ou 2, caractérisée en ce que le montage rotatif dudit support (18) est réalisé au moyen d'un pivot (24) monté sur une console (26) fixée sur un pilier (11) de la halle où se trouve le convertisseur.

4. Installation selon l'une des revendications 1 ou 2, caractérisée en ce que ledit support (18) est monté pivotant sur une poutre surélevée (134) disposée transversalement au plan médian vertical perpendiculaire à l'axe de basculement (Y-Y) du convertisseur (10), l'axe de rotation (X-X) dudit support étant disposé approximativement dans ce plan médian, et comporte deux bras (120, 122) diamétralement opposés dont l'un (120) supporte la lance (16), la hotte (12) et l'extrémité du conduit coudé (140) attenante à la hotte, l'autre bras (122) supportant l'autre extrémité dudit conduit coudé.

5. Installation selon la revendication 4, caractérisée en ce que ladite poutre (134) est supportée à ses extrémités par deux poteaux (136) ancrés au sol.

6. Installation selon l'une des revendications 4 ou 5, caractérisée en ce que ledit support (18) repose sur la poutre (134) par l'intermédiaire d'une couronne de roulement à billes ou à rouleaux (132).

7. Installation selon l'une des revendications 1 à 6, caractérisée en ce que la lance (16) est portée par un chariot (32, 142) déplaçable sur un chemin de roulement vertical (34, 144) fixé à l'extrémité libre du support (18) et suspendu à un câble enroulé sur le tambour d'un treuil (37, 148) qui est monté, avec son moteur d'entraînement, sur ledit support.

8. Installation selon la revendication 7, caractérisée en ce que ledit treuil est monté près de l'axe de rotation (X-X) dudit support (18).

9. Installation selon l'une des revendications 4, 5 ou 6, caractérisée en ce que le bras arrière (122) dudit support (18) porte un contrepoids d'équilibrage.

10. Installation selon l'une des revendications 4, 5 ou 6, caractérisée en ce que le bras arrière (122) dudit support (18) porte le treuil (148) commandant les déplacements du chariot porte-lance (142).

### Patentansprüche

1. Stahlerzeugungsanlage, bestehend aus einem Konverter, einer vertikalen Aufblaselanze, einer Haube, die am Ende eines Knierohres befestigt ist, welches sich an das Ende eines feststehenden mit einem Kamin verbundenen Rohres aufstellt, wenn die Haube über den Konverter versetzt wird, wobei die Haube und die Lanze auf derselben beweglichen Stütze montiert sind, dadurch gekennzeichnet, dass die besagte Stütze (18) aus einem Rahmen oder einer Gabel besteht und überhängend montiert ist, damit sie sich um eine senkrechte Achse (X-X) drehen kann, die seitlich gegenüber dem Konverter (10) liegt, zwischen dem letzteren und dem Kamin, wobei die Haube (12) und die Lanze (16) auf dem überhängenden freien Ende der besagten Stütze montiert sind.

2. Anlage gemäss Anspruch 1, dadurch gekennzeichnet, dass die besagte Stütze (18) so geneigt ist, dass das überhängende freie Ende, welches die Haube (12) und die Lanze (16) trägt, befindet sich auf einem höheren Niveau als sein gegenüberliegendes Ende und wobei das Knierohr (28, 140) die Stütze derart durchquert, dass die Haube unterhalb des oberen überhängenden freien Endes der besagten Stütze liegt, während das Ende des Knierohres, welches sich an das Ende des feststehenden Rohres (14) aufstellt, befindet sich oberhalb des tiefliegenden Endes der Stütze.

3. Anlage gemäss einem der Ansprüche 1 oder 2, dadurch gekennzeichnet, dass der Drehaufbau der besagten Stütze (18) mit Hilfe eines Zapfens (24) durchgeführt ist, welcher auf einer Konsole (26) montiert ist, die an einem Pfeiler (11) der Konverterhalle befestigt wird.

4. Anlage gemäss einem der Ansprüche 1 oder 2, dadurch gekennzeichnet, dass die besagte Stütze (18) ist drehbar gelagert auf einem überhöhten Träger (134), welcher quer zur vertikalen, rechtwinklig zu der Kippachse (Y-Y) des Konverters (10) angesetzten Mittelebene liegt, wobei die Drehachse (X-X) der besagten Stütze annähernd in dieser Mittelebene liegt, und besteht aus zwei entgegengesetzten Armen (120, 122), von denen ein Arm (120) die Lanze (16), die Haube (12) und das an die Haube anstossende Ende des Knierohres trägt und der andere Arm (122) das andere Ende des besagten Knierohres unterstützt.

5. Anlage gemäss Anspruch 4, dadurch gekennzeichnet, dass der besagte Träger (134) ist an seinen Endpunkten durch zwei in den Boden verankerte Pfeiler (136) unterstützt.

6. Anlage gemäss einem der Ansprüche 4 oder 5, dadurch gekennzeichnet, dass die besagte Stütze (18) ruht auf dem Träger (134) mittels eines Kugel- bzw. Rollendrehkranzes (132).

7. Anlage gemäss irgendeinem der obigen Ansprüche 1 bis 6, dadurch gekennzeichnet, dass die Lanze (16) ist durch eine Katze (32, 142) getragen, die auf eine vertikale Fahrbahn (34, 144) verschoben werden kann, welche an dem überhängenden freien Ende der Stütze (18) befestigt ist und an einem Seil aufgehängt, welches um die Trommel einer Winde (37, 148) aufgerollt ist, welche Winde zusammen mit dem Antriebsmotor auf der besagten Stütze montiert ist.

8. Anlage gemäss Anspruch 7, dadurch gekennzeichnet, dass die besagte Winde nahe bei der Drehachse (X-X) der besagten Stütze montiert ist.

9. Anlage gemäss einem der Ansprüche 4, 5 oder 6, dadurch gekennzeichnet, dass der hintere Arm (122) der besagten Stütze (18) ein Ausgleichsstellgewicht trägt.

10. Anlage gemäss einem der Ansprüche 4, 5 oder 6, dadurch gekennzeichnet, dass der hintere Arm (122) der besagten Stütze (18) die Winde (148) trägt, welche die Verstellungen der Lanzenhalterkatze (142) antreibt.

## Claims

1. Steelmaking installation which includes a converter, a vertical blowing lance, a hood fastened to the end of an elbow conduit which comes close to the end of a fixed conduit connected to a stack when the hood is moved on the top of the converter, the hood and the lance being arranged on the same movable support, characterized in that the said support (18) is made up from a framework or a for mounted overhung in order to be able to rotate about a vertical axis (X-X) located aside in relation to the converter (10), between the latter and the stack, the hood (12) and the lance (16) being mounted on the projecting free end of the aforesaid support.

2. Installation according to Claim 1, characterized in that the said support (18) is slanted in such a manner that its projecting free end, which holds the hood (12) and the lance (16), stays at higher level than its other end, and that the elbow conduit (28, 140) crosses through the support in such a manner, that the hood is set beneath the upper end of this support, while the end of the elbow conduit which is adapted to come close to the end of the fixed conduit (14) is situated above the lower end of the support.

3. Installation according to Claim 1 or 2, characterized in that the rotary mounting of the said support (18) is achieved by means of a centre pin (24) monted on a bracket (26) which is fixed to a pillar (11) of the hall where the converter is located.

4. Installation according to Claim 1 or 2, characterized in that the said support (18) is monted rotating on a overhead girder (134) arranged at right angles to the vertical mid-plane perpendicular to the tilting axis (Y-Y) of the converter (10), the rotating axis (X-X) of the said support being situated approximately in this mid-plane, and is made up of two arms (120, 122) diametrically opposed to one another, from which one arm (120) carries the lance (16), the hood (12) and the elbow conduit end (140) contiguous to the hood, the other arm (122) carrying the other end of the said elbow conduit.

5. Installation according to Claim 4, characterized in that the said girder (134) is borne at its farthest points by two posts (136) anchored into the ground.

6. Installation according to Claim 4 or 5, characterized in that the said support (18) rests on the girder (134) through the medium of a ball or roller slewing track (132).

7. Installation according to any of the Claims 1 to 6, characterized in that the lance (16) is borne by a trolley (32, 142) travelling on a vertical runway (34, 144) which is fixed to the projecting free end of the support (18) and hinged to a rope wound round the drum of a winch (37, 148) which is mounted with its drive motor on the said support.

8. Installation according to Claim 7, characterized in that the said winch is mounted near the rotation axis (X-X) of the said support (18).

9. Installation according to Claim 4, 5 or 6, characterized in that the rear arm (122) of the said support (18) bears a counterbalance weight.

10. Installation according to Claim 4, 5 or 6, characterized in that the rear arm (122) of the said support (18) carries the winch (148) which controls travels of the lance holder (142).

Fig. 1

Fig. 2

Fig. 3

Fig. 4